# EUROPEAN PATENT APPLICATION

(11) **EP 4 306 309 A1**
(43) Date of publication of application: **17.01.2024**
(21) Application number: 22306058.3
(22) Date of filing: 13.07.2022
(51) Int. Cl.: B29D 11/00

(54) **OPHTHALMIC LENS MOLDING SHELL AND PROCESS FOR MANUFACTURING SUCH A MOLDING SHELL**

(71) Applicant: Essilor International, 94220 Charenton-Le-Pont (FR)
(72) Inventor: Wisutwattana, Apiwit, 10520 Bangkok (TH); Suriwong, Jirasak, 10520 Bangkok (TH); Rakkitsiri, Ninja, 10520 Bangkok (TH)
(74) Representative: Jacobacci Coralis Harle

(57) **Abstract**

The invention relates to an ophthalmic lens molding shell (30) having two main faces (31, 32) and an edge face (33) surrounding the main faces, a first of said main faces being adapted to face another molding shell during the molding of the ophthalmic lens.

According to the invention, the ophthalmic lens molding shell also comprises:
- a flat facet (34) extending along an outer edge of the first main face, and
- a first chamfer (36) extending along an outer edge of the flat facet, between said flat facet and said edge face.

## Description

### TECHNICAL FIELD OF THE INVENTION

The present invention generally relates to the field of eyeglasses.

It more particularly relates to a molding shell suitable for molding ophthalmic lenses and having to this end two main faces and an edge face surrounding the main faces, a first of said main faces being adapted to face another molding shell for the molding of ophthalmic lenses.

### BACKGROUND INFORMATION AND PRIOR ART

A traditional mold for molding ophthalmic lenses comprises two molding shells at the periphery of which is disposed an annular closure member that defines with these shells a molding cavity.

The two molding shells are generally made of a transparent material while the closure member is made of a tape.

The main function of the tape is to close the space between the molding shells, so as to keep the monomer between these shells when the mold assembly is filled of a monomer to be polymerized.

The molding shells are usually manufactured by a computer numerical control machine and polished in a polishing machine.

Each molding shell has two main faces, a first of which being designed to generate a face of the lens. Each shell also comprises an edge face situated around these main faces.

The edge line of the first main face, located at the junction between this first main face and the edge face, is circular around a main axis or sharp. But its cross-section (in a plane comprising this main axis) may be rounded due to the polishing tool, which generates a kind of chamfer.

The rounded or sharp shape of this chamfer is not deliberate, and its size is quite uncontrollable and is especially very small.

The applicant has observed that this rounded or sharp shape generates chips along the edge of this main face that minimize the lifetime of the molding shell.

He has also observed that, to ease the disassembly of the lens when the monomer is polymerized, it is important to provide a chamfer with a very specific size.

But in practice, controlling this size of the chamfer is an aim difficult to achieve, and it may make the molding shell very fragile.

### SUMMARY OF THE INVENTION

In this context, the present invention provides a solution for the durability of molding shells that also increases the lenses disassembly performances.

More specifically, the invention consists in an ophthalmic lens molding shell as defined in the introduction, comprising:
- a flat facet extending along an outer edge of the first main face, and
- a first chamfer extending along an outer edge of the flat facet, between said flat facet and said edge face.

In other words, the applicant has found a specific shape to machine around the first main face to increase the durability of molding shells without affecting its lenses disassembly performances (i.e. without increasing the time necessary to mold and disassembly a lens).

He has also developed a machining process to generate this specific shape, that permits a better chamfer size constancy and a better mold edge quality, which enables to obtain a low scrap rate of lenses and a good casting yield performance.

The molding shells obtained by means of this process are indeed more resistant (and can be used twice longer than a molding shell currently used) and have less chips, reducing therefore the number of discarded lenses.

Other preferred features of the invention are the following ones:
- the flat facet has a width equal to 0.5 mm, with a tolerance of plus or minus 0.1 mm.
- the edge face extends around a central axis.
- in each cross-section of said first chamfer in a plane passing through said central axis, the first chamfer is tilted relative to the flat facet by an angle of 40°, with a tolerance of plus or minus 5°.
- the first chamfer has a width, measured radially relative to said central axis, equal to 0.08 mm, with a tolerance of plus or minus 0.05 mm.
- the ophthalmic lens molding shell comprises a second chamfer located between the edge face and the other main face.
- in each cross-section of said second chamfer in a plane passing through said central axis, the second chamfer is tilted relative to the edge face by an angle of 45°, with a tolerance of plus or minus 5°.
- the second chamfer has a width, measured radially relative to said central axis, equal to 0.5 mm, with a tolerance of plus 0.2mm or minus 0.1 mm.

The invention also relates to a process of manufacturing an ophthalmic lens molding shell, comprising steps of:
- machining a raw piece so as to obtain a semi-finished molding shell having two main faces and an edge face surrounding the main faces, a first of said main faces being adapted to face another molding shell during the molding of the ophthalmic lens, a preliminary chamfer being located between the edge face and said first main face,
- polishing said preliminary chamfer and said edge face in order to generate:
   ¤ a flat facet extending along an outer edge of the first main face, and
   ¤ a first chamfer extending along an outer edge of the flat facet, between said flat facet and said edge face.

Preferably, during said polishing step, at least 0.03 mm of material thickness is removed from the edge face and/or from the preliminary chamfer.

Preferably, said polishing step comprises a first sub-step during which the preliminary chamfer is reduced and the flat facet appears, and a second sub-step during which the first chamfer is finished.

Preferably, at the end of the first sub-step, the flat facet has a width, measured radially relative to a central axis of said edge face, comprised between 0.5 and 0.6 mm, and the first chamfer has a width equal to 0.13 mm, with a tolerance of plus or minus 0.02 mm.

Preferably, at the end of the machining step, the preliminary chamfer is tilted relative to the edge face by an angle of 40 degrees, with a tolerance of plus or minus 5 degrees.

Preferably, at the end of the machining step, the preliminary chamfer has a width, measured radially relative to the central axis, of 0.8 mm, with a tolerance of plus or minus 0.05 mm.

### DETAILED DESCRIPTION OF EXAMPLE(S)

The following description with reference to the accompanying drawings, given by way of non-limiting example makes it clear what the invention consists in and how it can be reduced to practice.

In the accompanying drawings:
- Figure 1 is a schematic view of a mold assembly according to the invention,
- Figure 2 is a view of a cross-section of a molding shell of the mold assembly of figure 1,
- Figure 3 is a detailed view of area III of figure 2,
- Figure 4 is a detailed view of area IV of figure 3,
- Figure 5 is a view of a cross-section of a part of the molding shell of figure 2, after a first step of manufacturing this molding shell, and
- Figure 6 is the same view of the cross-section of the part of the molding shell of figure 5, at the end of the manufacturing of this molding shell.

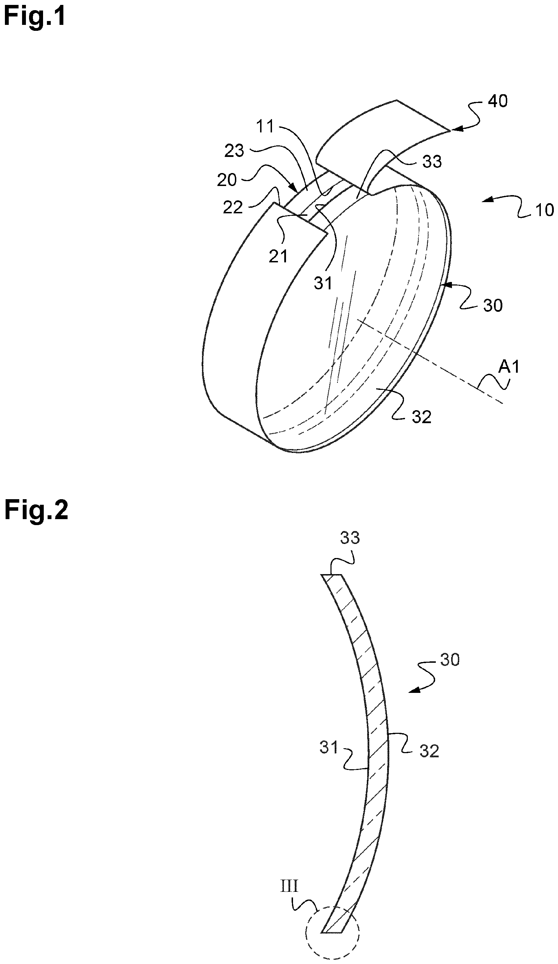

Figure 1 shows a mold assembly 10.

This mold assembly 10 comprises two molding shells 20, 30 and an annular closure member 40 located at the periphery of these shells.

Each molding shell 20, 30 has a shape of a transparent thick disc, with two main faces 21, 22, 31, 32 and a peripheral edge face 23, 33.

The first main faces of the molding shells 20, 30 that face each other are named "internal faces 21, 31". These internal faces are shaped to generate the main faces of an ophthalmic lens. One of these internal faces is convex while the other one is concave.

The other main faces of the molding shells 20, 30, named external faces 22, 32, can be plane (as shown in Figure 1) or can show a different shape (as shown in Figure 2).

The peripheral edge faces 23, 33 of the molding shells 20, 30 have here a cylindrical shape of revolution about a main axis A1.

The thickness of the peripheral edge faces 23, 33 is usually comprised between 3 millimeters and 6 millimeters.

The two edges of each peripheral edge face 23, 33 have circular shapes.

The two molding shells 20, 30 are located relative to each other, during the molding process, so that their internal faces 21, 31 face each other and so that their main axes A1 remain coincident.

The closure member 40 has a shape of a band that is wounded and glued around at least a part of the peripheral edges of the two molding shells 20, 30.

This closure member maintains one molding shell at a distance from the other molding shell. Thus, the two molding shells 20, 30 and the closure member 40 define together a molding cavity 11 to be filled with a molding material (called hereafter "monomer"), which molding cavity 11 is lens-shaped (in negative).

Consequently, the internal face of the closing member 40 presents two lateral parts to be glued on the peripheral edge faces 23, 33 of the two molding shells 20, 30, and a central portion adapted to close the molding cavity.

Here, this closing member 40 has a length longer than the circumference of the peripheral edge face 23, 33 of each molding shell 20, 30 in order to entirely close the molding cavity 11 after this cavity has been completely filled with the monomer.

Both molding shells 20, 30 are manufactured in the same way in order to have similar characteristics. For the clarity of the description, only one of these molding shells 20, 30 will be described hereinafter and will be represented in the figures.

This molding shell 30 is the one that has an internal main face 31 that is concave.

The exact shapes of the internal and external faces can be very diverse and will not be described here. As shown in Figure 2, it will only be considered here that this molding shell 30 has a constant thickness.

The invention more specifically relates to the shape of the area located at the junction between the internal main face 31 and the peripheral edge face 33 of the molding shell 30.

The shape of this area is indeed important to ensure a good demolding of the lens and to increase the durability of the molding shell (this area being subject to strong stresses, it is often this area which imposes a molding shell replacement).

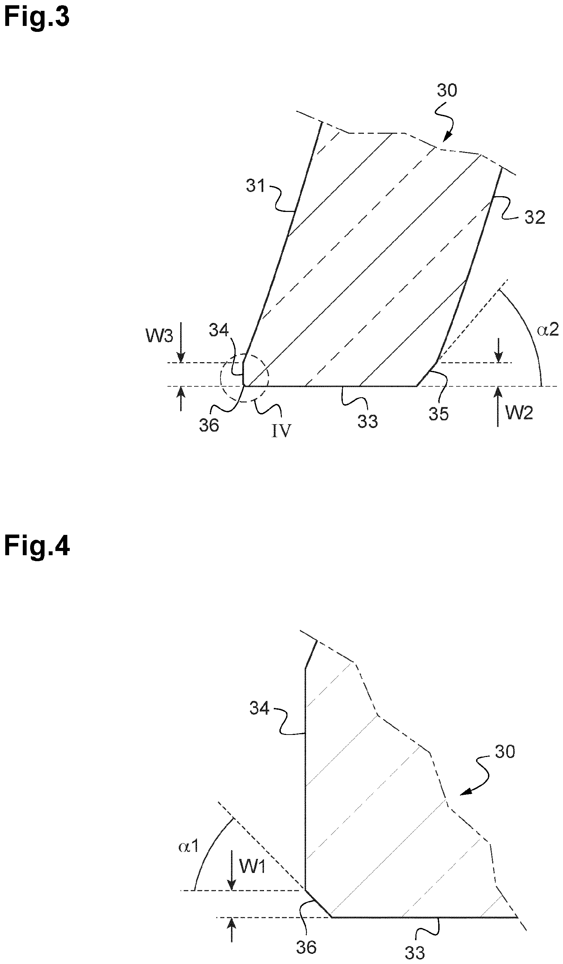

According to the invention, as shown in Figures 3 and 4, the molding shell 30 comprises in this area:
- a flat facet 34 having one side coincident with the outer edge line of the internal main face 31, and
- a first chamfer 36 having one side coincident with the outer edge line of the flat facet 34 and the other side coincident with the internal edge line of the peripheral edge face 33.

It can be noted here that if the terms "internal" and "external" refer to directions parallel to the main axis A1, the term "outer" refers to a direction radial with respect to this axis (an outer side being located in a direction opposite to this axis).

The flat facet 34 has a flat ring shape and the first chamfer 36 has a truncated cone shape, and they extend between the internal main face 31 and the peripheral edge face 33, the first chamfer being located outside the flat facet 34 relative to the main axis A1.

As shown in Figure 3, the flat facet 34 extends in a plane orthogonal to the main axis A1 and has an annular shape of constant width W3 about this main axis A1. Its both sides have consequently circular shapes.

The width W3, measured radially relative to the main axis A1, is preferably equal to 0.5 mm, with a tolerance of plus or minus 0.1 mm.

As shown in Figure 4 in a cross-section made in an indifferent plane containing the main axis A1, the first chamfer 36 is tilted relative to the flat facet 34 by an angle α1 that remains constant all around the main axis A1.

This angle α1 is non null. It is preferably of 40°, with a tolerance of plus or minus 5°.

The width W1 of this first chamfer 36 is also non null and remains constant all around the main axis.

This width W1, measured radially relative to the central axis A1, is preferably equal to 0.08 mm, with a tolerance of plus or minus 0.05 mm.

In other words, the width W3 is more than three times greater than the width W1 and preferably more than five times greater than the width W1.

As shown in Figure 3, on the other side of the peripheral edge face 33, the molding shell 30 comprises a second chamfer 35 located between this edge face 33 and the external main face 32.

In each cross-section made in a plane containing the main axis A1, the second chamfer 35 is tilted relative to the peripheral edge face 33 by a non-null angle α2 that is preferably of 45°, with a tolerance of plus or minus 5°.

The width W2 of this second chamfer 35 is also non null and remains constant all around the main axis. This width W2, measured radially relative to the central axis A1, is preferably equal to 0.5 mm, with a tolerance of plus 0.2mm or minus 0.1 mm.

The process for manufacturing the molding shell 30 is very specific in the sense in that machining accurate flat facet 34 and first chamfer 36 is quite difficult.

To this end, this process comprises two main steps.

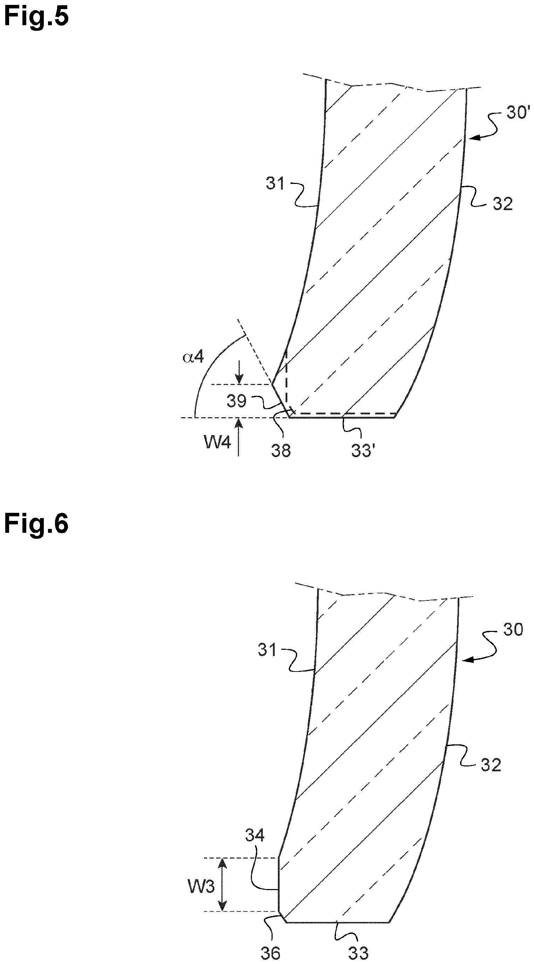

The first main step consists in machining a raw piece so as to obtain a semi-finished molding shell 30' having only a preliminary chamfer 39, as shown in Figure 5.

The second step consists in polishing at least a part of this semi-finished molding shell 30' so as to obtain the molding shell 30 described above.

We can describe this process in more detail.

The raw piece can be of any shape, but its size is necessarily greater than the one of the semi-finished molding shell 30' to be machined.

For instance, it can have a shape of a thick disc of constant thickness.

But in a preferred embodiment, this raw piece has already two main faces and an edge face presenting shapes similar to that of the molding shell 30 described above. The main difference is that, instead of having flat facet and a first chamfer, the raw piece has a rounded edge connecting each main face and the edge face. This rounded edge has, in a sectional plane, a shape of an arc of a circle with a radius of 2 mm.

The first step is preferably performed by a CNC machine so as to remove some material from the raw piece in order to obtain the semi-finished molding shell 30'. This CNC machine is preferably a ruining machine.

It is for instance a Schaublin turning machine (for example the 302 Schaublin machine).

During this first step, the edge face is grinded in order to reduce its diameter and to generate a preliminary chamfer 39

Consequently, as shown in Figure 5, at the end of the first step, the semi-finished molding shell 30' has:
- two main faces 31, 32 (referenced 31, 32 because their shape are similar to those of the main faces of the finished molding shell 30) and an edge face 33' surrounding these main faces 31, 32, and
- a preliminary chamfer 39 located between the edge face 33' and said first main face 31.

The preliminary chamfer 39 has a truncated cone shape (with a symmetry of revolution around the main axis A1), that extends between the outer edge of the internal main face 31 and the peripheral edge face 33'.

In each cross-section made in a plane containing the main axis A1, the preliminary chamfer 39 is tilted relative to the peripheral edge face 33' by a non-null and constant angle α4 that is preferably of 40°, with a tolerance of plus or minus 5°.

The width W4 of this preliminary chamfer 39 is also non null and remains constant about the main axis A1. This width W4, measured radially relative to the central axis A1, is greater than 0.1 mm. In this step, this width W4 is between 0.2 and 0.3 mm.

The second step consists in polishing the first main face 31, the preliminary chamfer 39 and the peripheral edge face 33 of the semi-finished molding shell 30' in order to remove material (along the line 38 of figure 5) so as to generate the flat facet 34 and the first chamfer 36 (see figure 6).

To this end, at least 0.03 mm of material thickness is removed from the peripheral edge face 33 and from the preliminary chamfer 39.

In practice, this polishing step comprises a first sub-step during which the preliminary chamfer 39 is reduced and the flat facet 34 is generated, and a second sub-step during which the first chamfer 36 is finished.

The first sub-step is performed by means of a polishing machine, for instance a machine sold under the brand "Kwangjin KJ-4 spherical polishing machine".

During this first sub-step, the semi-finished molding shell 30' is blocked on a support, and its first main face 31 is pressed against a polishing pad and then rubs against it in counter-rotation. In other words, the grinding is performed along an axis substantially parallel to the main axis A1.

During this process, the flat facet 34 is getting larger until it reaches a target size. In the same time, the preliminary chamfer 39 is removed in part until it reaches another target size.

At the end of this first sub-step, the semi-finished molding shell 30' is polished so that :
- the flat facet 34 has a width that is non null and constant about the main axis, and that is preferably comprised between 0.5 and 0.6 mm when measured radially relative to the central axis A1, and
- the remainder of the preliminary chamfer 39 (which forms the first chamfer 36) has a width that is also non null and constant about the main axis, and that is preferably equal to 0.13 mm, with a tolerance of plus or minus 0.02 mm when measured radially relative to the central axis A1.

There is no other finishing process for the flat facet 34.

The second sub-step is performed by means of another polishing machine, here a machine sold under the brand "CP-8 Auto Lens Polishing Machine".

This machine is distinct from the previous one because the molding shell is held in a different way. During the first sub-step, the first main face 31 was just pressed down to a polishing tool or pad. On the contrary, during this second sub-step, the molding shell is hold by catching it on the main faces 31, 32 between two cylinders in order to press the edge face 33 to the polishing wheel below.

During this sub-step, only the edge face 33 of the molding shell is pressed against a polishing pad and rubs against it in counter-direction. In other words, the grinding is performed along an axis substantially radial to the main axis A1 (or more radial than during the previous substep).

Consequently, the edge face 33 is polished and its diameter is reduced until it reaches a target size. In the same time, the first chamfer 36 is removed in part until it reaches its target size (0.08 mm).

At the end of this second sub-step, the molding shell 30 is achieved and has the shape described above.

The present invention is in no way limited to the embodiment described and shown. In particular, the given widths and angles may be slightly different.

## Claims

1. An ophthalmic lens molding shell (30) having two main faces (31, 32) and an edge face (33) surrounding the main faces (31, 32), a first of said main faces (31) being adapted to face another molding shell (20) during the molding of the ophthalmic lens,
**characterized in that** it also comprises:
- a flat facet (34) extending along an outer edge of the first main face (31), and
- a first chamfer (36) extending along an outer edge of the flat facet (34), between said flat facet (34) and said edge face (33).

2. The ophthalmic lens molding shell (30) according to claim 1, wherein the flat facet (34) has a width (W3) equal to 0.5 mm, with a tolerance of plus or minus 0.1 mm.

3. The ophthalmic lens molding shell (30) according to any one of claims 1 and 2, wherein, the edge face (33) extending around a central axis (A1), in each cross-section of said first chamfer (36) in a plane passing through said central axis (A1), the first chamfer (36) is tilted relative to the flat facet (34) by an angle (α1) of 40°, with a tolerance of plus or minus 5°.

4. The ophthalmic lens molding shell (30) according to any one of claims 1 to 3, wherein, the edge face (33) extending around a central axis (A1), the first chamfer (36) has a width (W1), measured radially relative to said central axis (A1), equal to 0.08 mm, with a tolerance of plus or minus 0.05 mm.

5. The ophthalmic lens molding shell (30) according to any one of claims 1 to 4, comprising a second chamfer (35) located between the edge face (33) and the other main face (32).

6. The ophthalmic lens molding shell (30) according to claim 5, wherein, the edge face (33) extending around a central axis (A1), in each cross-section of said second chamfer (35) in a plane passing through said central axis (A1), the second chamfer (35) is tilted relative to the edge face (33) by an angle (α2) of 45°, with a tolerance of plus or minus 5°.

7. The ophthalmic lens molding shell (30) according to any one of claims 5 and 6, wherein, the edge face (33) extending around a central axis (A1), the second chamfer (35) has a width (W2), measured radially relative to said central axis (A1), equal to 0.5 mm, with a tolerance of plus 0.2mm or minus 0.1 mm.

8. Process of manufacturing an ophthalmic lens molding shell (30), comprising steps of:
- machining a raw piece so as to obtain a semi-finished molding shell (30') having two main faces (31, 32) and an edge face (33) surrounding the main faces (31, 32), a first of said main faces (31) being adapted to face another molding shell (20) during the molding of the ophthalmic lens, a preliminary chamfer (39) being located between the edge face (33) and said first main face (31),
- polishing said preliminary chamfer (39) and said edge face (33) in order to generate:
¤ a flat facet (34) extending along an outer edge of the first main face (31), and
¤ a first chamfer (36) extending along an outer edge of the flat facet (34), between said flat facet (34) and said edge face (33).

9. Process according to claim 8, wherein, during said polishing step, at least 0.03 mm of material thickness is removed from the edge face (33) and/or from the preliminary chamfer (39).

10. Process according to any one of claims 9 and 10, wherein said polishing step comprises a first sub-step during which the preliminary chamfer (39) is reduced and the flat facet (34) appears, and a second sub-step during which the first chamfer (36) is finished.

11. Process according to claim 10, wherein, at the end of the first sub-step, the flat facet (34) has a width, measured radially relative to a central axis (A1) of said edge face (33), comprised between 0.5 and 0.6 mm, and the first chamfer (36) has a width equal to 0.13 mm, with a tolerance of plus or minus 0.02 mm.

12. Process according to any one of claims 8 to 11, wherein, the edge face (33) extending around a central axis (A1), at the end of the machining step, the preliminary chamfer (39):
- is tilted relative to the edge face (33) by an angle (α4) of 40 degrees, with a tolerance of plus or minus 5 degrees,
- has a width (W4), measured radially relative to the central axis (A1), of 0.8 mm, with a tolerance of plus or minus 0.05 mm.
